# EUROPEAN PATENT APPLICATION

(11) **EP 3 242 057 A1**
(43) Date of publication of application: **08.11.2017**
(21) Application number: 15875407.7
(22) Date of filing: 27.12.2015
(51) Int. Cl.: F16H 19/02, B25J 18/02, F16G 13/14, F16G 13/20, F16H 19/04

(54) **LINEAR-MOTION EXTENDING/CONTRACTING MECHANISM AND ROBOT ARM MECHANISM**

(30) Priority: 29.12.2014 JP 2014267033
(71) Applicant: Life Robotics Inc., Koto-ku Tokyo 135-0047 (JP)
(72) Inventor: YOON Woo-Keun, Tokyo 135-0047 (JP); SANO Hikaru, Tokyo 135-0047 (JP)
(74) Representative: Herrero & Asociados, S.L.
(86) International application number: PCT/JP2015/086453
(87) International publication number: WO 2016/108281

(57) **Abstract**

A linear extension and retraction mechanism includes a plurality of first connection pieces (23) coupled together bendably; and a plurality of second connection pieces (22) coupled together bendably, wherein back faces of the first connection pieces (23) and back faces of the second connection pieces (22) are joined together, thereby generally forming a columnar body by constraining bending, and the columnar body is relaxed when the first and second connection pieces (23, 22) are separated from each other, the linear extension and retraction mechanism further including an ejection section (30) adapted to support the columnar body.

## Description

### FIELD

Embodiments described herein relate generally to a linear extension and retraction mechanism and robot arm mechanism.

### BACKGROUND

Conventionally, articulated robot arm mechanisms are used in an industrial robot and various other fields. Such articulated robot arm mechanisms are equipped, for example, with a linear extension and retraction mechanism. The linear extension and retraction mechanism includes a plurality of connection pieces coupled together, for example, bendably in a row. When an arm is extended, the plurality of connection pieces thus far housed in a support body is sent out as a columnar body having a certain degree of rigidity with bending of the connection pieces being constrained. On the other hand, when the arm is retracted, the columnar body is pulled back to be stored, becoming bendable with the constraints on the bending being relaxed in the support body.

### BRIEF DESCRIPTION OF THE INVENTION

Robot arm mechanisms equipped with a linear extension and retraction mechanism have potential to be used in various situations and applications. Thus, an object of the present embodiment is to provide a robot arm mechanism equipped with a linearly extendable and retractable arm according to application.

A linear extension and retraction mechanism according to an embodiment of the present invention includes: a plurality of first connection pieces coupled together bendably; and a plurality of second connection pieces coupled together bendably, wherein a foremost one of the plurality of second connection pieces is connected with a foremost one of the plurality of first connection pieces, the first connection pieces are overlapped on the second connection pieces in upper part of the first connection pieces, thereby forming a columnar body by constraining bending, and the columnar body is relaxed when the first connection pieces and the second connection pieces are separated from each other, the linear extension and retraction mechanism further comprising an ejection section adapted to form the columnar body by joining the first connection pieces to the second connection pieces and support the columnar body, wherein the first connection pieces and the second connection pieces, when put together, generally have a tubular shape with a substantially circular or substantially oval cross section.

### BRIEF DESCRIPTION OF THE VIEWS OF THE DRAWINGS

FIG. 1 is an external perspective view of a robot arm mechanism according to an embodiment of the present invention;
FIG. 2 is a diagram showing the robot arm mechanism of FIG. 1 using graphic symbol representation;
FIG. 3 is a side view of the robot arm mechanism of FIG. 1;
FIGS. 4A to 4F are diagrams showing a structure of a second connection piece of the robot arm mechanism according to the present embodiment;
FIGS. 5A to 5F are diagrams showing a structure of a first connection piece of the robot arm mechanism according to the present embodiment;
FIGS. 6A and 6B are diagrams showing a structure of a columnar body of the robot arm mechanism according to the present embodiment;
FIGS. 7A to 7D are supplementary explanatory diagrams illustrating the first connection piece and second connection piece that form a shape substantially circular in cross section, according to the present embodiment;
FIGS. 8A and 8B are supplementary explanatory diagrams illustrating a first configuration example of a columnar body having a triangular shape in cross section, according to a variation of the present embodiment;
FIGS. 9A and 9B are supplementary explanatory diagrams illustrating a second configuration example of the columnar body having a triangular shape in cross section, according to a variation of the present embodiment;
FIGS. 10A and 10B are supplementary explanatory diagrams illustrating a configuration example of a columnar body having a trapezoidal shape in cross section, according to a variation of the present embodiment;
FIGS. 11A and 11B are supplementary explanatory diagrams illustrating a configuration example of a columnar body having a parallelogramic shape in cross section, according to a variation of the present embodiment;
FIGS. 12A and 12B are supplementary explanatory diagrams illustrating a configuration example of a columnar body having a hexagonal shape in cross section, according to a variation of the present embodiment; and
FIGS. 13A and 13B are supplementary explanatory diagrams illustrating a configuration example of a columnar body having a modified rectangular shape in cross section, according to a variation of the present embodiment.

### DETAILED DESCRIPTION

A linear extension and retraction mechanism according to an embodiment of the present invention is described below with reference to the drawings. Note that the linear extension and retraction mechanism according to the present embodiment can be used as an independent system (joint). However, in the following description, the linear extension and retraction mechanism according to the present embodiment is described by taking as an example an articulated robot arm mechanism incorporating the linear extension and retraction mechanism according to the present embodiment. In the following description, components having a substantially same function and configuration are denoted by the same reference numerals, and redundant description thereof will be omitted unless necessary.

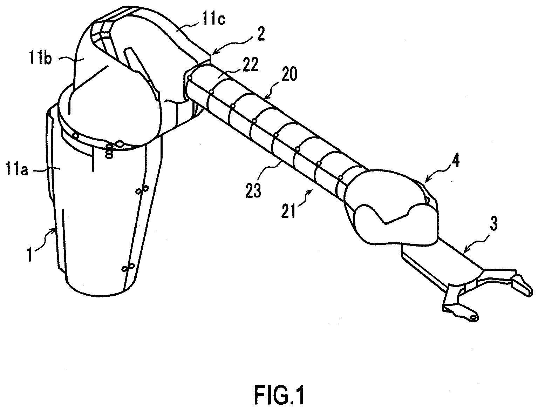

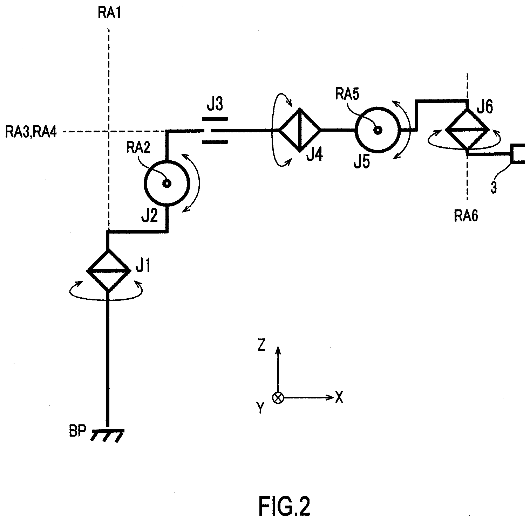

FIG. 1 is an external perspective view of the robot arm mechanism according to the present embodiment. FIG. 2 shows an internal structure of the robot arm mechanism of FIG. 1. The robot arm mechanism includes a base 1 substantially cylindrical in shape and an arm section 2 connected to the base 1. An end effector 3 is attached to a tip of the arm section 2. A hand section capable of gripping an object is illustrated in FIG. 1 as the end effector 3. The end effector 3 is not limited to the hand section and may be another tool, a camera, or a display. An adaptor may be attached to the tip of the arm section 2 to allow the end effector 3 to be replaced with any type of end effector 3.

The arm section 2 has a plurality of--six herein--joints J1, J2, J3, J4, J5, and J6. The plurality of joints J1, J2, J3, J4, J5, and J6 are arranged in order from the base 1. Generally, a first, second, and third axes RA1, RA2, and RA3 are called root three axes, and a fourth, fifth, and sixth axes RA4, RA5 and, RA6 are called wrist three axes and adapted to change an attitude of a hand section 3. At least one of the joints J1, J2, and J3 constituting the wrist three axes is a linear motion joint. Here, the third joint J3 is a linear motion joint and is configured to be a joint with a relatively long extension distance, in particular.

The first joint J1 is a torsion joint (revolute joint) that turns on the first axis of rotation RA1 supported, for example, perpendicularly to a base plane. The second joint J2 is a bending joint (revolute joint) that turns on the second axis of rotation RA2 perpendicular to the first axis of rotation RA1. The third joint J3 extends and retracts linearly along the third axis (axis of linear movement) RA3 perpendicular to the second axis of rotation RA2. The fourth joint J4 is a torsion joint that turns on the fourth axis of rotation RA4 which matches the third axis of movement RA3. The fifth joint J5 is a bending joint that turns on the fifth axis of rotation RA5 orthogonal to the fourth axis of rotation RA4. The sixth joint J6 is a bending joint that turns on the sixth axis of rotation RA6 orthogonal to the fourth axis of rotation RA4 and perpendicular to the fifth axis of rotation RA5.

An arm support body (first support body) 11a forming the base 1 has a cylindrical hollow structure formed around the axis of rotation RA1 of the first joint J1. The first joint J1 is mounted on a fixed base (not shown). When the first joint J1 rotates, the first support body 11a axially rotates in accordance with the turn of the arm section 2. Note that the first support body 11a may be fixed on a ground plane. In this case, the arm section 2 turns independently of the first support body 11a. A second support body 11b is connected to an upper part of the first support body 11a.

The second support body 11b has a hollow structure continuous with the first support body 11a. One end of the second support body 11b is attached to a rotating section of the first joint J1. The other end of the second support body 11b is open, and a third support body 11c is fitted therein pivotally on the axis of rotation RA2 of the second joint J2. The third support body 11c has a scaly hollow structure communicating with the first support body 11a and the second support body 11b. In accordance with bending rotation of the second joint J2, a rear part of the third support body 11c is housed in and sent out from the second support body 11b. The rear part of the third joint J3, which constitutes a linear motion joint of the arm section 2, is housed inside the continuous hollow structure of the first support body 11a and the second support body 11b by retraction thereof.

The arm support body (first support body) 11a forming the base 1 has a cylindrical hollow structure formed around the axis of rotation RA1 of the first joint J1. The first joint J1 is mounted on a fixed base (not shown). When the first joint J1 rotates, the first support body 11a axially rotates in accordance with the turn of the arm section 2. Note that the first support body 11a may be fixed on a ground plane. In this case, the arm section 2 turns independently of the first support body 11a. The second support body 11b is connected to the upper part of the first support body 11a.

A lower part of a rear end of the third support body 11c is fitted in a lower part of an open end of the second support body 11b pivotally on the axis of rotation RA2. Consequently, the second joint J2 is configured as a bending joint that turns on the axis of rotation RA2. When the second joint J2 pivots, the arm section 2 pivots vertically, i.e., pivots up and down, on the axis of rotation RA2 of the second joint J2 together with the hand section 3.

The fourth joint J4 is a torsion joint having the axis of rotation RA4 which typically matches a center axis of the arm section 2 along an extension and retraction direction of the arm section 2, that is, the axis of movement RA3 of the third joint J3. When the fourth joint J4 rotates, the hand section 3 rotates on the axis of rotation RA4 from the fourth joint J4 to the tip thereof. The fifth joint J5 is a bending joint having the axis of rotation RA5 orthogonal to the axis of movement RA4 of the fourth joint J4. When the fifth joint rotates, the hand section 3 pivots up and down from the fifth joint J5 to its tip. The sixth joint J6 is a bending joint having an axis of rotation RA6 orthogonal to the axis of rotation RA4 of the fourth joint J4 and perpendicular to the axis of rotation RA5 of the fifth joint J5. When the sixth joint J6 rotates, the hand section 3 swings left and right.

As described above, the third joint J3 serving as a joint section constitutes a main constituent of the arm section 2. The hand section 3 provided at the tip of the arm section 2 is moved to a given position by the first joint J1, the second joint J2 and the third joint J3, and placed in a given posture by the fourth joint J4, the fifth joint J5 and the sixth joint J6. In particular, a linear extension and retraction distance of the third joint J3 enables the hand section 3 to act on an object in a wide range from a position close to the base 1 to a position far from the base 1. The third joint J3 is characterized by the linear extension and retraction distance realized by the linear extension and retraction mechanism constituting the third joint J3.

The linear extension and retraction mechanism includes a first connection piece string 21 and a second connection piece string 20. The first connection piece string 21 is made up of a plurality of first connection pieces 23 having the same cross section. Each pair of successive first connection pieces 23 are coupled together on each other's surfaces by a pin, forming a string. The first connection piece string 21 has the property of being bendable. The second connection piece string 20 is made up of a plurality of second connection pieces 22 having the same cross sectional shape. Each pair of successive second connection pieces 22 are coupled together by a pin, forming a string. The second connection piece string 20 has the property of being bendable. The second connection piece 22 has a width substantially equivalent to that of the first connection piece 23. Note that a back surface of the first connection piece 23 faces a back surface of the second connection piece 22. Therefore, a back surface direction of the first connection piece 23 described later coincides with a front surface direction of the second connection piece 22. Similarly, a front surface direction of the first connection piece 23 coincides with a back surface direction of the second connection piece 22.

The leading first connection piece 23 of the first connection piece string 21 and the leading second connection piece 22 of the second connection piece string 20 are connected with each other by a head piece 26. The head piece 26 has a combined shape of the first connection piece 23 and the second connection piece 22. When the first and second connection piece strings 21 and 20 are sent out through an opening in the third support body 11c with the head piece 26 serving as a leading piece, the first and second connection piece strings 21 and 20 are overlapped each other on their back surfaces. When the first and second connection piece strings 21 and 20 are kept overlapped, the first connection piece string 21 and the second connection piece string 20 constrain each other from bending. Consequently, the first and second connection piece strings 21 and 20 make up a columnar body having a certain degree of rigidity. When the first and second connection piece strings 21 and 20 are separated from each other, the constraint on bending is relaxed and the columnar body is separated into the first connection piece string 21 and second connection piece string 20. Each of the separated first and second connection piece strings 21 and 20 is returned to a bendable state, bent individually, and stored in the first support body 11a.

When the arm is extended, a motor M1 operates and a drive gear 24a rotates forward, causing the second connection piece string 20 to be guided, in a posture parallel to the center axis of the arm, to an ejection section 30 by a guide roller 40. Note that a linear gear 23a to be engaged with the drive gear 24a is formed on the back surface of each of the second connection pieces 22. When each pair of successive second connection pieces 22 are coupled together, acquiring a linear shape, the respective linear gears 22a are connected to form a continuous linear gear (rack). When the drive gear 24a rotates, the second connection piece string 20 moves linearly. Along with the movement of the second connection piece string 20, the first connection piece string 21 is guided to the ejection section 30 along a guide rail (not shown) located behind the ejection section 30. The ejection section forms the columnar body by joining together the first connection piece string 21 and the second connection piece string 20 and supports the columnar body. Therefore, the first connection piece string 21 and second connection piece string 20 guided to the ejection section 30 are overlapped each other, forming the columnar body, and sent out linearly along the third axis of movement RA3.

When the arm is retracted, the motor M1 operates and the drive gear 24a rotates backward, causing the columnar body to be pulled back toward the third support body 11c together with the second connection piece string 20 engaged with drive gear 24a. The columnar body pulled back is separated into the first connection piece string 21 and second connection piece string 20 behind the ejection section 30. For example, the second connection piece string 20 making up the columnar body is sandwiched between the guide roller 40 and the drive gear 24a while the first connection piece string 21 making up the columnar body is pulled downward, for example, by gravity, and consequently, the first connection piece string 21 is separated from the second connection piece string 20. The separated first connection piece string 21 and second connection piece string 20 are stored in the first support body 11a.

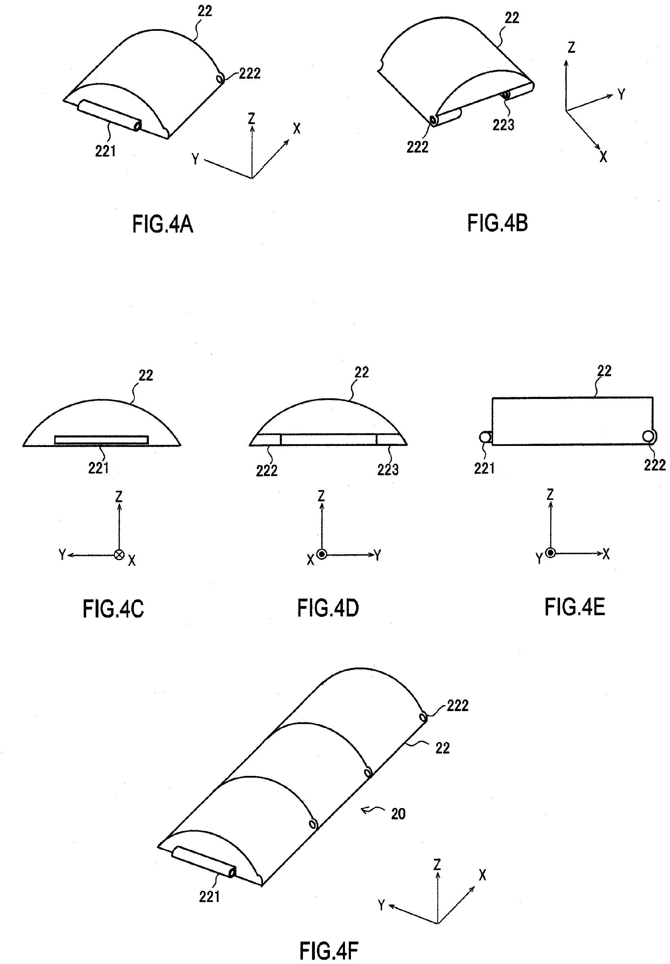

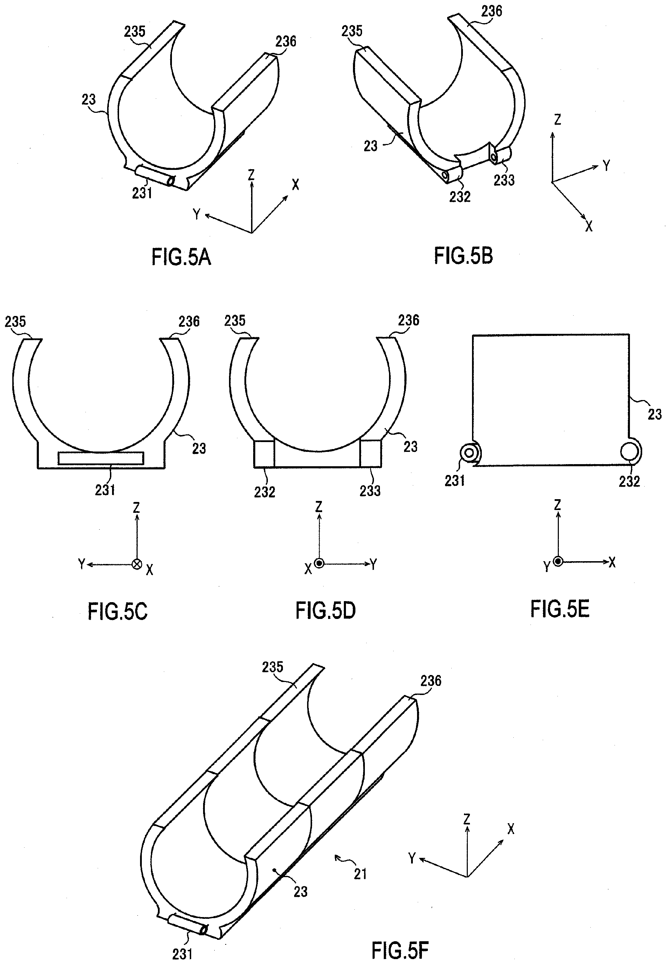

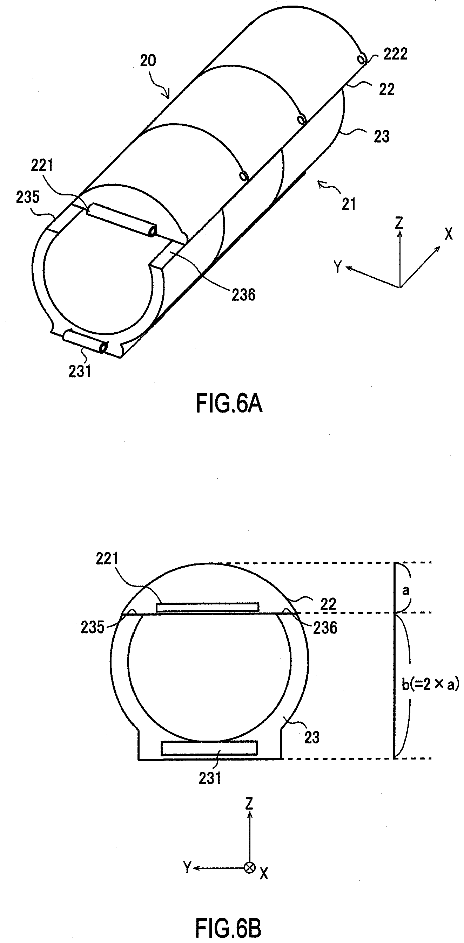

A structure of the arm section 2 of the robot arm mechanism according to the present embodiment is described below with reference to FIGS. 4 to 6. FIGS. 4A to 4F are diagrams showing a structure of the second connection piece 22 of the robot arm mechanism according to the present embodiment. FIG. 4A is a perspective view showing a rear end of the second connection piece 22, FIG. 4B is a perspective view showing a front end of the second connection piece 22, FIG. 4C is a rear view of the second connection piece 22, FIG. 4D is a front view of the second connection piece 22, FIG. 4E is a side view of the second connection piece 22, and FIG. 4F is a diagram showing the second connection piece string 20. FIGS. 5A to 5F are diagrams showing a structure of the first connection piece 23 of the robot arm mechanism according to the present embodiment. FIG. 5A is a perspective view showing a rear end of the first connection piece 23, FIG. 5B is a perspective view showing a front end of the first connection piece 23, FIG. 5C is a rear view of the first connection piece 23, FIG. 5D is a front view of the first connection piece 23, FIG. 5E is a side view of the first connection piece 23, and FIG. 5F is a diagram showing the first connection piece string 21. FIGS. 6A and 6B are diagrams showing a structure of the columnar body of the robot arm mechanism according to the present embodiment. FIG. 6A shows a perspective view of the columnar body and FIG. 6B shows a sectional view of the columnar body.

The columnar body is formed when the first connection piece 23 and the second connection piece 22 are overlapped each other. The columnar body is a columnar rod body provided with a certain degree of rigidity by being made up of the first connection piece string 21 and the second connection piece string 20 overlapped each other. The columnar body is generally formed into a tubular body having any of various cross sectional shape by a combination of the first connection piece 23 and the second connection piece 22. The tubular body is defined as a shape surrounded by a top plate, a bottom plate, and side plates on top, bottom, and left and right sided and left open on front and rear sides.

Cross sectional shapes of the first connection piece 23 and the second connection piece 22 are configured to occupy the respective segments when the cross sectional shape of the columnar body is divided in two. The cross sectional shape of the columnar body can be any of various shapes including a circular shape, an oval shape, and a polygonal shape. As a typical example, a configuration of the columnar body having a substantially circular cross section is described as shown in FIGS. 6A and 6B. The substantially circular cross section is divided in two by a straight line. The cross sectional shape of the first connection piece 23 is configured to occupy one of the segments and the cross sectional shape of the second connection piece 22 is configured to occupy the other segment. For example, as shown in FIGS. 6A and 6B, the substantially circular cross section is divided in two by a perpendicular line that divides the diameter of the cross section at a ratio of 1:2. The cross sectional shape of the first connection piece 23 is configured to occupy 1/3 of the cross section and the cross sectional shape of the second connection piece 22 is configured to occupy the remaining 2/3 of the cross section.

As shown in FIGS. 4A to 4F, the second connection piece 22 is a flat plate whose surface protrudes in the shape of an arc. This shape can also be called a semicylindrical shape or crescent shape. Pinhole cases 221, 222, and 223 are formed integrally with the second connection piece 22. The pinhole cases 221, 222, and 223 have pinholes into which pins used to couple together the pair of successive second connection pieces 22 are inserted. Specifically, the second connection piece 22 has the pinhole case 221 formed integrally on a central back side of the rear end face. Also, the second connection piece 22 has the pinhole cases 222 and 223 formed integrally on both sides of the front end. The pinholes in the pinhole cases 221, 222, and 223 have center axes parallel to a width direction of the second connection piece 22. A single pin is inserted into the pinhole in the pinhole case 221 of the preceding second connection piece 22 and into the pinholes in the pinhole cases 222 and 223 of the succeeding second connection piece 22. Consequently, the pair of successive second connection pieces 22 are coupled together. After the coupling, the front surfaces of the pair of successive second connection pieces 22 become continuous, and so are the back surfaces of the pair of successive second connection pieces 22. Due to the position at which the pair of successive second connection pieces 22 are coupled together as well as the cross sectional shape of the second connection pieces 22, the second connection piece string 20 is bendable in the back surface direction, but has the property of being unbendable in the front surface direction.

As shown in FIGS. 5A to 5F, the first connection piece 23 is configured as a short trough-like body. The first connection piece 23 has a substantially arc-shaped cross section. Pinhole cases 231, 232, 233 are formed integrally with the first connection piece 23. The pinhole cases 231, 232, 233 have pinholes into which pins used to couple together the pair of successive first connection pieces 23 are inserted. Specifically, the first connection piece 23 has the pinhole case 231 formed integrally on a central back side of the rear end face. Also, the first connection piece 23 has the pinhole cases 232 and 233 formed integrally on both sides of the front end. The pinholes in the pinhole cases 231, 232, and 233 have center axes parallel to a width direction of the first connection piece 23. A single pin is inserted into the pinhole in the pinhole case 231 of the preceding first connection piece 23 and into the pinholes in the pinhole cases 232 and 233 of the succeeding first connection piece 23. Consequently, the pair of successive first connection pieces 23 are coupled together. This makes back surfaces 235 and 236 of the first connection piece string 21 continuous. Also, the front surfaces of the first connection piece string 21 become continuous. Due to the position at which the pair of successive first connection pieces 23 are coupled together as well as the cross sectional shape of the first connection pieces 23, the first connection piece string 21 is bendable in the front surface direction, but has the property of being unbendable in the back surface direction.

As shown in FIGS. 6A and 6B, the first connection piece string 21 and the second connection piece string 20 are overlapped each other with the continuous back surfaces 235 and 236 of the first connection piece string 21 placed in contact with the back surfaces of the second connection pieces 22. As shown in FIGS. 6A and 6B, when the first connection piece string 21 having a substantially arc-shaped cross section and the semicylindrical second connection piece string 20 whose surface protrudes in the shape of an arc are overlapped each other, a columnar body with substantially circular cross section is constructed.

As described above, the first connection piece string 21 has the property of being bendable in the front surface direction (inward) while the second connection piece string 20 has the property of being bendable in the back surface direction (inward). That is, both the first and second connection piece strings 21 and 20 have the property of being bendable inward. When placed in contact with each other, the first and second connection piece strings 21 and 20 constrain each other from bending. This allows the first and second connection piece strings 21 and 20 to form the columnar body having a certain degree of rigidity.

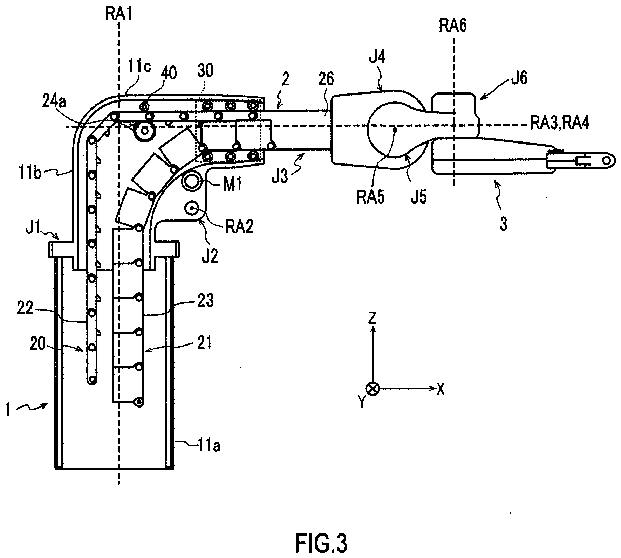

As described above, with the robot arm mechanism according to the present embodiment, the first connection piece string 21 and the second connection piece string 20 can form the columnar body (arm section 2) configured to be substantially circular in cross section and provided with a certain degree of rigidity. Also, as shown in FIG. 3, the first connection piece string 21 moves in the second support body 11b by bending in its front surface direction. In so doing, even if an external force tending to bend in the back surface direction acts on the first connection piece string 21, the first connection piece string 21, which has the property of being unbendable in the back surface direction due to interference between end faces of each pair of successive first connection pieces 23, does not bend in the back surface direction. That is, the property of the first connection piece string 21, i.e., the property of being unbendable in its back surface direction, eliminates the need for a mechanism for preventing bending in the back surface direction. This makes it possible to reduce parts count, resulting in reduced cost. Similarly, the second connection piece string 20 moves in the second support body 11b by bending in its back surface direction.

Note that it is sufficient that the columnar body has a cross section whose outer contour is substantially circular in shape. Therefore, the cross sections of the first and second connection pieces 23 and 22 are not limited to the shapes shown in FIGS. 4 to 6.

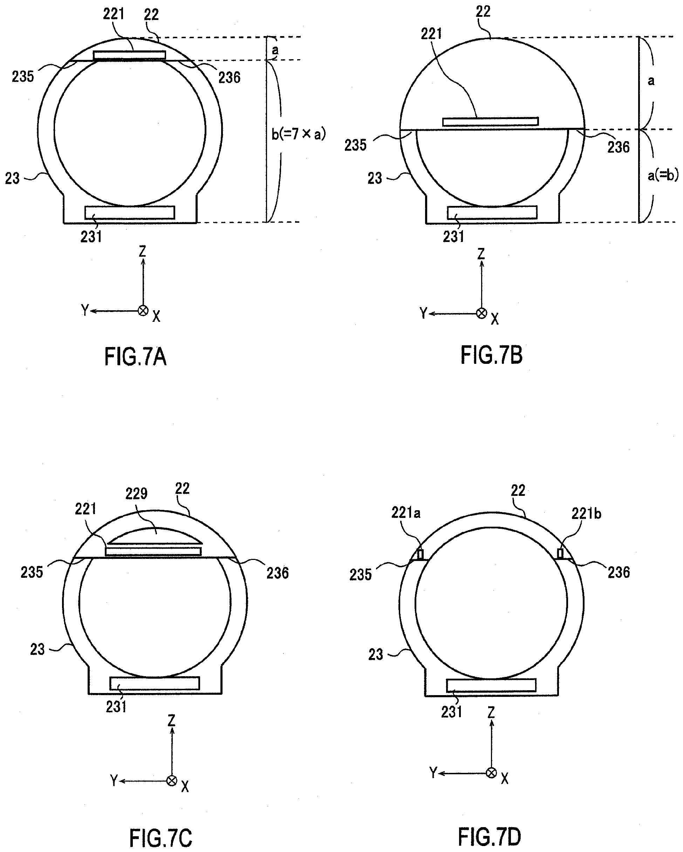

FIGS. 7A to 7D are supplementary explanatory diagrams illustrating the first connection piece 23 and the second connection piece 22 that form a shape substantially circular in cross section, according to the present embodiment, where the cross section of the columnar body is viewed from behind.

The cross section of the first connection piece 23 may occupy a larger proportion of the cross section of the columnar body than in the present embodiment (see FIGS. 6A and 6B). For example, as shown in FIG. 7A, a substantially circular cross section is divided in two by a perpendicular line that divides the diameter of the cross section at a ratio of 1:7. The cross sectional shape of the second connection piece 22 is configured to occupy 1/8 of the circular cross section and the cross sectional shape of the first connection piece 23 is configured to occupy the remaining 7/8 of the circular cross section. This makes it possible to reduce constituent materials of the columnar body and is effective in reducing weight, cost, and the like of the columnar body. Also, a hollow portion is increased, increasing the range of its use. For example, a plurality of cables can be connected to the hand section 3 through the hollow portion.

Alternatively, the cross section of the second connection piece 22 may occupy a larger proportion of the cross section of the columnar body than in the present embodiment (see FIGS. 6A and 6B). Specifically, as shown in FIG. 7B, each of the first connection piece 23 and the second connection piece 22 has a semicircular cross section. As shown in FIG. 7C, the second connection piece 22 may be formed into a columnar shape with a hollow portion 229 provided therein. This eliminates the need for an amount of material corresponding to the hollow portion 229 and is effective in reducing weight, cost, and the like of the second connection piece 22. Also, as shown in FIG. 7D, pinhole cases 221a and 221b may be formed integrally with an outer frame of the second connection piece 22. This is effective in reducing weight, cost, and the like of the second connection piece 22. Also, the hollow portion is increased, increasing the range of its use.

In the present embodiment, structures of the first and second connection piece strings 21 and 20 have been described by citing a columnar body with a substantially circular cross sectional shape as a typical example. Of course, the cross sectional shape may be substantially oval. However, the cross sectional shape of the columnar body made up of the first connection piece 23 and the second connection piece 22 is not limited to a substantially circular shape or a substantially oval shape. The cross sectional shape of the columnar body may be a polygonal shape. For example, a substantially triangular shape, trapezoidal shape, parallelogramic shape, hexagonal shape, or the like may be adopted as the cross sectional shape of the columnar body. The first and second connection pieces 23 and 22 making up columnar bodies having these cross sectional shapes are described below as variations.

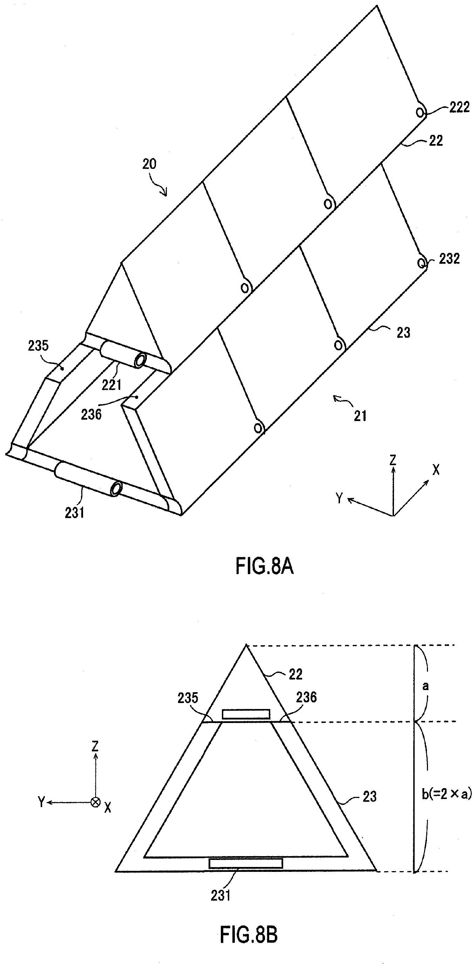

FIGS. 8A and 8B are supplementary explanatory diagrams illustrating a first configuration example of a columnar body having a triangular shape in cross section, according to a variation of the present embodiment. FIG. 8A shows a perspective view of the columnar body and FIG. 8B shows a sectional view of the columnar body. As shown in FIGS. 8A and 8B, the columnar body generally has a tubular shape with a triangular, and preferably equilateral triangular, cross section. The triangular cross section is divided in two by a straight line parallel to the base. The cross sectional shape of the first connection piece 23 is configured to occupy one of the segments and the cross sectional shape of the second connection piece 22 is configured to occupy the other segment. For example, as shown in FIGS. 8A and 8B, the triangular cross section is divided in two by a perpendicular line that divides the height at a ratio of 1:2. The cross sectional shape of the second connection piece 22 is configured to occupy 1/3 of the cross section, including a vertex corresponding to a base. The cross sectional shape of the first connection piece 23 is configured to occupy the remaining 2/3 of the cross section, including the base. The second connection piece 22 configured in this way is formed into a regular triangular prism and the first connection piece 23 is formed into a trough-like body having a trapezoidal cross section without an upper base. Consequently, as with the embodiment described above, the first connection piece string 21 and the second connection piece string 20 can form a columnar body (arm section 2) configured to be triangular in cross section and provided with a certain degree of rigidity.

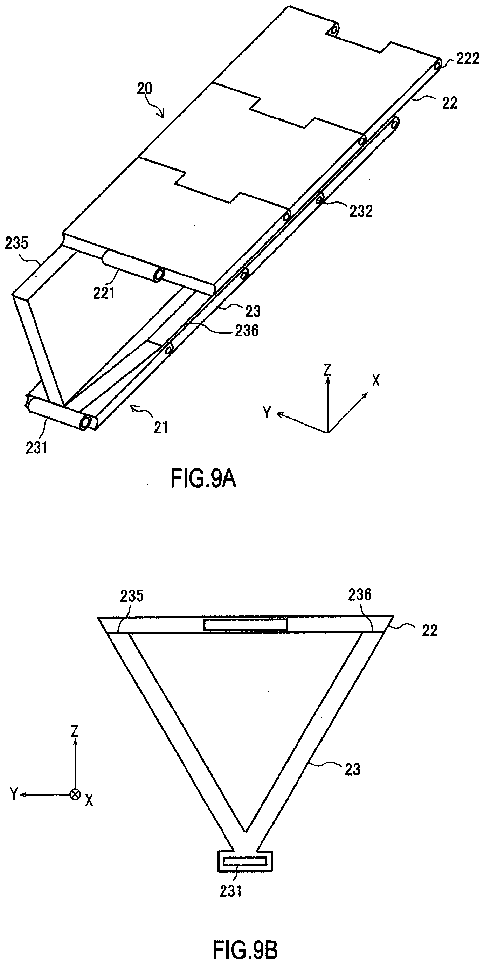

FIGS. 9A and 9B are supplementary explanatory diagrams illustrating a second configuration example of the columnar body having a triangular shape in cross section, according to a variation of the present embodiment. FIG. 9A shows a perspective view of the columnar body and FIG. 9B shows a sectional view of the columnar body. As shown in FIGS. 9A and 9B, the columnar body generally has a triangular, and preferably equilateral triangular, cross section. For example, as shown in FIGS. 9A and 9B, the triangular cross section is divided into the base and the other part. The second connection piece 22 is configured as a plate-like body with a cross sectional shape corresponding to the base and the first connection piece 23 is configured as a V-shaped trough-like body with a cross sectional shape corresponding to the other part. Consequently, as with the embodiment described above, the first connection piece string 21 and the second connection piece string 20 can form a columnar body (arm section 2) configured to be triangular in cross section and provided with a certain degree of rigidity.

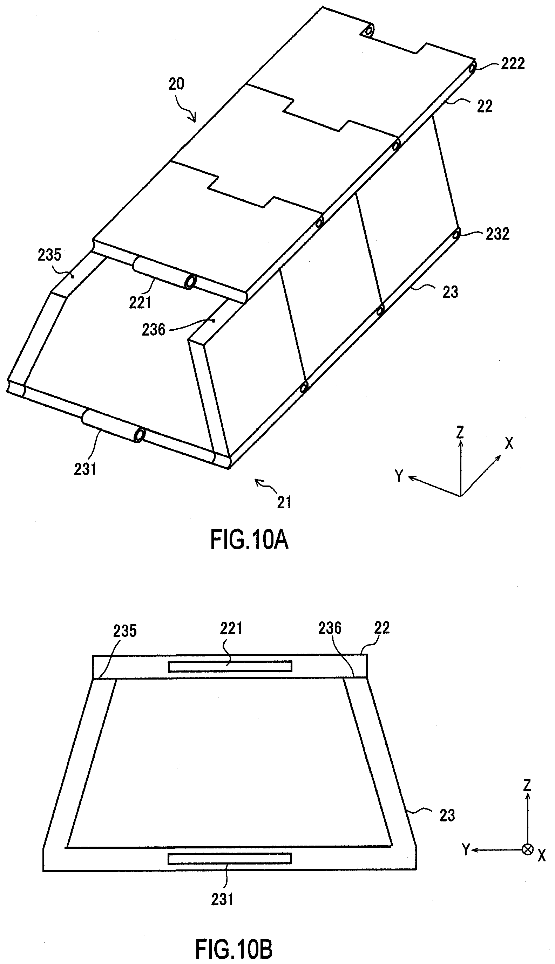

FIGS. 10A and 10B are supplementary explanatory diagrams illustrating a configuration example of a columnar body having a trapezoidal shape in cross section, according to a variation of the present embodiment. FIG. 10A shows a perspective view of the columnar body and FIG. 10B shows a sectional view of the columnar body. As shown in FIGS. 10A and 10B, the columnar body is generally formed into a tubular shape with a trapezoidal cross section. The trapezoidal cross section is divided in two by a straight line parallel to the upper base (lower base). The cross sectional shape of the first connection piece 23 is configured to occupy one of the segments and the cross sectional shape of the second connection piece 22 is configured to occupy the other segment. For example, the trapezoidal cross section is divided into the upper base and the other part. The second connection piece 22 is configured as a plate-like body with a cross sectional shape corresponding to the upper base and the first connection piece 23 is configured as a trough-like body with a cross sectional shape corresponding to the other part. As in the above case, the first connection piece string 21 and the second connection piece string 20 can generally form a columnar body (arm section 2) of a trapezoidal cross sectional shape provided with a certain degree of rigidity, i.e., a tubular shape. Note that the trapezoidal cross section of the columnar body may be divided into a lower base and the other part. In that case, the part corresponding to the lower base is made up of the second connection piece 22 and the other part is made up of the first connection piece 23.

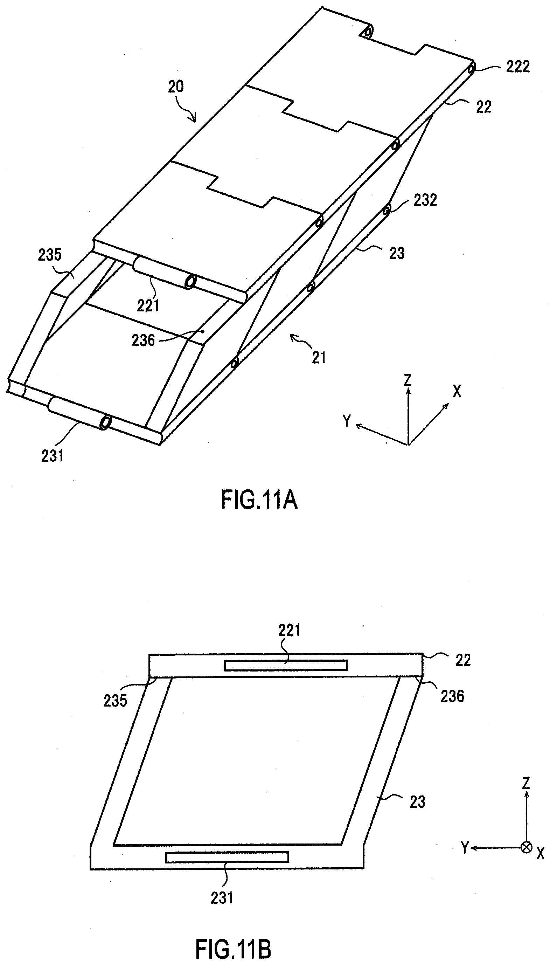

FIGS. 11A and 11B are supplementary explanatory diagrams illustrating a configuration example of a columnar body having a parallelogramic shape in cross section, according to a variation of the present embodiment. FIG. 11A shows a perspective view of the columnar body and FIG. 11B shows a sectional view of the columnar body. As shown in FIGS. 11A and 11B, the columnar body generally has a parallelogramic cross section. The parallelogramic sectional shape is divided in two by a straight line parallel to the base. The cross sectional shape of the first connection piece 23 is configured to occupy one of the segments and the cross sectional shape of the second connection piece 22 is configured to occupy the other segment. For example, the parallelogramic cross section is divided into the base and the other part. The second connection piece 22 is configured as a plate-like body with a cross sectional shape corresponding to the base and the first connection piece 23 is configured as a trough-like body with a cross sectional shape corresponding to the other part. Consequently, as with the embodiment described above, the first connection piece string 21 and the second connection piece string 20 can generally form a columnar body (arm section 2) of a parallelogramic cross sectional shape provided with a certain degree of rigidity, i.e., a tubular shape.

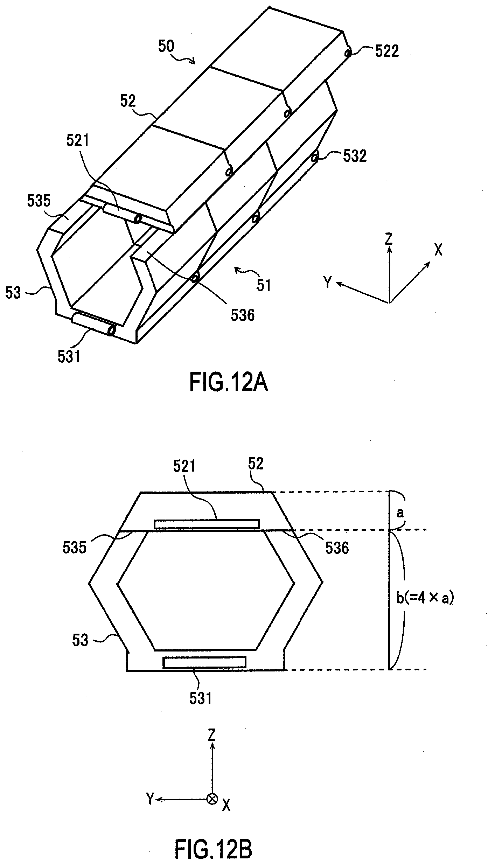

FIGS. 12A and 12B are supplementary explanatory diagrams illustrating a configuration example of a columnar body having a hexagonal shape in cross section, according to a variation of the present embodiment. As shown in FIGS. 12A and 12B, the columnar body generally has a regular hexagonal cross section. The hexagonal sectional shape is divided in two by a straight line parallel to one side. The cross sectional shape of the first connection piece 23 is configured as a plate-like body occupying one of the segments and the cross sectional shape of the second connection piece 22 is configured as a trough-like body occupying the other segment. As shown in FIGS. 12A and 12B, the regular hexagonal cross section may be divided in two by a perpendicular line that divides the height from the base at a ratio of 1:4. Of the two parts, one side of the regular hexagon making up a plate-like body constitutes the second connection piece 22 and the other five sides making up a trough-like body constitute the first connection piece 23. As with the embodiment described above, the first connection piece string 21 and the second connection piece string 20 can generally form a columnar body (arm section 2) of a hexagonal cross sectional shape provided with a certain degree of rigidity, i.e., a hexagonal tubular shape.

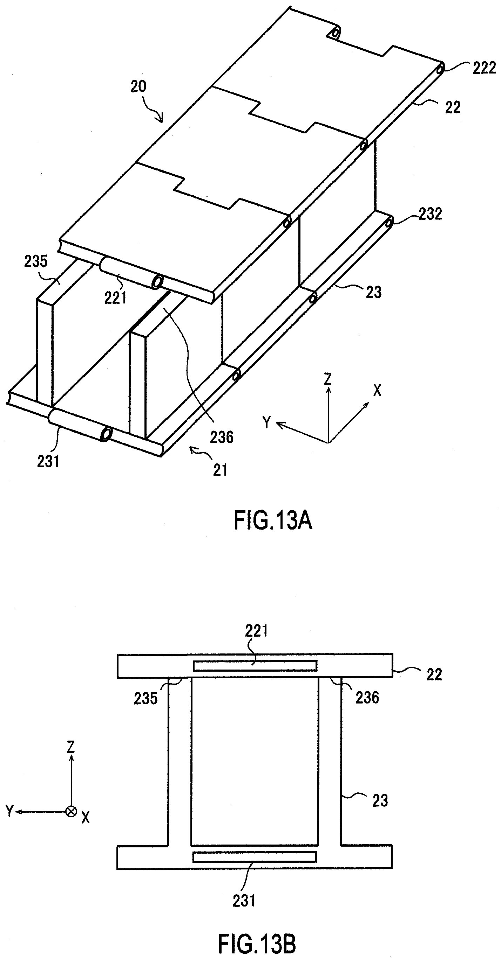

FIGS. 13A and 13B are supplementary explanatory diagrams illustrating a configuration example of a columnar body having a II-shape in cross section, according to a variation of the present embodiment. In this case, the cross section of the columnar body is divided into a part including the base and two lateral sides and a part including a top portion. The second connection piece 22 is configured as a plate-like body having a cross sectional shape corresponding to the top portion and the first connection piece 23 is configured as a trough-like body having a cross sectional shape corresponding to the part including the base and two lateral sides. Consequently, as with the embodiment described above, the first connection piece string 21 and the second connection piece string 20 can form a columnar body (arm section 2) configured to be substantially II-shaped in cross section and provided with a certain degree of rigidity. Therefore, in the case of a cross section having another polygonal shape, the sides making up the polygon may be offset toward the interior of the polygon. Also, an outer frame shape of the cross section of the columnar body does not need to be completely polygonal. For example, corners may be rounded. Also, although not illustrated, the columnar body may have an H-shaped cross section. The H-shaped cross section having two sides parallel to each other is divided into one side and the other part. The second connection piece 22 is configured to have a cross sectional shape corresponding to the side and the first connection piece 23 is configured to have a cross sectional shape corresponding to the other part.

Thus, according to any of the variations described in FIGS. 8 to 13, the first connection piece string 21 and the second connection piece string 20 can form a columnar body having a polygonal cross section with a certain degree of rigidity. That is, according to the robot arm mechanism described in any of the present embodiment and the variations thereof, the first connection piece string 21 and the second connection piece string 20 can form a columnar body having a certain degree of rigidity and any of various cross sectional shapes.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A linear extension and retraction mechanism comprising:
a plurality of first connection pieces coupled together bendably;
a plurality of second connection pieces coupled together bendably, a foremost one of the plurality of second connection pieces being connected with a foremost one of the plurality of first connection pieces, the first connection pieces and the second connection pieces being overlapped each other, thereby a columnar body being formed, the columnar body being relaxed when the first connection pieces and the second connection pieces are separated from each other; and
an ejection section adapted to form the columnar body by joining the first connection pieces to the second connection pieces and support the columnar body, wherein
the first connection pieces and the second connection pieces, when overlapped each other, generally have a tubular shape with a substantially circular or substantially oval cross section.

2. A linear extension and retraction mechanism comprising:
a plurality of first connection pieces coupled together bendably;
a plurality of second connection pieces coupled together bendably, a foremost one of the plurality of second connection pieces being connected with a foremost one of the plurality of first connection pieces, the first connection pieces and of the second connection pieces being overlapped each other, thereby a columnar body being formed, the columnar body being relaxed when the first connection pieces and the second connection pieces are separated from each other; and
an ejection section adapted to form the columnar body by joining the first connection pieces to the second connection pieces and support the columnar body, wherein
the first connection pieces and the second connection pieces, when overlapped each other, generally have a tubular shape with a triangular cross section.

3. A linear extension and retraction mechanism comprising:
a plurality of first connection pieces coupled together bendably;
a plurality of second connection pieces coupled together bendably, a foremost one of the plurality of second connection pieces being connected with a foremost one of the plurality of first connection pieces, the first connection pieces and the second connection pieces being overlapped each other, thereby a columnar body being formed, the columnar body being relaxed when the first connection pieces and the second connection pieces are separated from each other; and
an ejection section adapted to form the columnar body by joining the first connection pieces to the second connection pieces and support the columnar body, wherein
the first connection pieces and the second connection pieces, when overlapped each other, generally have a tubular shape with a pentagonal or higher polygonal cross section.

4. A linear extension and retraction mechanism comprising:
a plurality of first connection pieces coupled together bendably;
a plurality of second connection pieces coupled together bendably, a foremost one of the plurality of second connection pieces being connected with a foremost one of the plurality of first connection pieces, the first connection pieces and the second connection pieces being overlapped each other, thereby forming a columnar body by constraining bending, the columnar body being relaxed when the first connection pieces and the second connection pieces are separated from each other; and
an ejection section adapted to form the columnar body by joining the first connection pieces to the second connection pieces and support the columnar body, wherein
the first connection pieces and the second connection pieces, when overlapped each other, generally have a tubular shape with a trapezoidal cross section.

5. A linear extension and retraction mechanism comprising:
a plurality of first connection pieces coupled together bendably;
a plurality of second connection pieces coupled together bendably, a foremost one of the plurality of second connection pieces being connected with a foremost one of the plurality of first connection pieces, the first connection pieces and the second connection pieces being overlapped each other, thereby a columnar body being formed, the columnar body being relaxed when the first connection pieces and the second connection pieces are separated from each other; and
an ejection section adapted to form the columnar body by joining the first connection pieces to the second connection pieces and support the columnar body, wherein
the first connection pieces and the second connection pieces, when overlapped each other, generally have a tubular shape with a substantially I-shaped cross section.

6. A robot arm mechanism equipped with a linear extension and retraction mechanism that comprises:
a plurality of first connection pieces coupled together bendably;
a plurality of second connection pieces coupled together bendably, a foremost one of the plurality of second connection pieces being connected with a foremost one of the plurality of first connection pieces, the first connection pieces and the second connection pieces being overlapped each other, thereby a columnar body being formed, the columnar body being relaxed when the first connection pieces and the second connection pieces are separated from each other; and
an ejection section adapted to form the columnar body by joining the first connection pieces to the second connection pieces and support the columnar body, wherein
the first connection pieces and the second connection pieces, when overlapped each other, generally have a tubular shape with a substantially circular or substantially oval cross section.

7. A robot arm mechanism equipped with a linear extension and retraction mechanism that comprises:
a plurality of first connection pieces coupled together bendably;
a plurality of second connection pieces coupled together bendably, a foremost one of the plurality of second connection pieces being connected with a foremost one of the plurality of first connection pieces, the first connection pieces and the second connection pieces being overlapped each other, thereby a columnar body being formed, the columnar body being relaxed when the first connection pieces and the second connection pieces are separated from each other; and
an ejection section adapted to form the columnar body by joining the first connection pieces to the second connection pieces and support the columnar body, wherein
the first connection pieces and the second connection pieces, when overlapped each other, generally have a tubular shape with a triangular cross section.

8. A robot arm mechanism equipped with a linear extension and retraction mechanism that comprises:
a plurality of first connection pieces coupled together bendably;
a plurality of second connection pieces coupled together bendably, a foremost one of the plurality of second connection pieces being connected with a foremost one of the plurality of first connection pieces, the first connection pieces and the second connection pieces being overlapped each other, thereby a columnar body being formed, the columnar body being relaxed when the first connection pieces and the second connection pieces are separated from each other; and
an ejection section adapted to form the columnar body by joining the first connection pieces to the second connection pieces and support the columnar body, wherein
the first connection pieces and the second connection pieces, when overlapped each other, generally have a tubular shape with a pentagonal or higher polygonal cross section.

9. A robot arm mechanism equipped with a linear extension and retraction mechanism that comprises:
a plurality of first connection pieces coupled together bendably; and
a plurality of second connection pieces coupled together bendably,
wherein a foremost one of the plurality of second connection pieces is connected with a foremost one of the plurality of first connection pieces, the first connection pieces and the second connection pieces being overlapped each other, thereby forming a columnar body by constraining bending, the columnar body being relaxed when the first connection pieces and the second connection pieces are separated from each other; and
an ejection section adapted to form the columnar body by joining the first connection pieces to the second connection pieces and support the columnar body, wherein
the first connection pieces and the second connection pieces, when overlapped each other, generally have a tubular shape with a trapezoidal cross section.

10. A robot arm mechanism equipped with a linear extension and retraction mechanism that comprises:
a plurality of first connection pieces coupled together bendably;
a plurality of second connection pieces coupled together bendably, a foremost one of the plurality of second connection pieces being connected with a foremost one of the plurality of first connection pieces, the first connection pieces and the second connection pieces being overlapped each other, thereby a columnar body being formed, the columnar body being relaxed when the first connection pieces and the second connection pieces are separated from each other; and
an ejection section adapted to form the columnar body by joining the first connection pieces to the second connection pieces and support the columnar body, wherein
the first connection pieces and the second connection pieces, when overlapped each other, generally have a tubular shape with an I-shaped cross section.
